Europäisches Patentamt

European Patent Office

Office européen des brevets

(19)

(11) Veröffentlichungsnummer : **0 443 060 B1**

## (12) EUROPÄISCHE PATENTSCHRIFT

(45) Veröffentlichungstag der Patentschrift :
**02.12.92 Patentblatt 92/49**

(51) Int. Cl.⁵ : **B65G 13/06**

(21) Anmeldenummer : **90103340.7**

(22) Anmeldetag : **21.02.90**

(54) **Antriebsrolleneinheit.**

(43) Veröffentlichungstag der Anmeldung :
**28.08.91 Patentblatt 91/35**

(45) Bekanntmachung des Hinweises auf die
Patenterteilung :
**02.12.92 Patentblatt 92/49**

(84) Benannte Vertragsstaaten :
**CH DE ES FR GB IT LI**

(56) Entgegenhaltungen :
**EP-A- 355 251
DE-A- 3 724 126
DE-C- 882 373
US-A- 3 690 440**

(73) Patentinhaber : **BAVARIA CARGO
TECHNOLOGIE GMBH
Kirschstrasse 20
W-8000 München 50 (DE)**

(72) Erfinder : **Huber, Thomas
Schechen 2a
W-8127 Iffeldorf (DE)**

(74) Vertreter : **Strasser, Wolfgang, Dipl.-Phys et al
Patentanwälte Strohschänk, Uri & Strasser
Innere Wiener Strasse 8
W-8000 München 80 (DE)**

**Beschreibung**

Die Erfindung betrifft eine Antriebsrolleneinheit zum Antrieb von Gegenständen auf einer Förderbahn, mit zwei Antriebsrollen, die von einer Elektromotoranordnung über eine Getriebeanordnung drehend antreibbar sind und in ihrer Antriebsstellung mit der Unterseite des anzutreibenden Gegenstands im Eingriff stehen, wobei die beiden Antriebsrollen mit ihren Drehachsen im wesentlichen quer zur Antriebsrichtung des Gegenstand und in ihrer Axialrichtung nebeneinander angeordnet sind, wobei die Getriebeanordnung ein von der Elektromotoranordnung angetriebenes, die erste Antriebsrolle drehend antreibendes erstes Getrieberad und ein mit dem ersten Getrieberad gekoppeltes, die zweite Antriebsrolle drehend antreibendes zweites Getrieberad umfaßt, und wobei die beiden Antriebsrollen in einer Halterung montiert sind, die bezüglich einer Basis der Förderbahn un eine vertikale Achse drehbar gelagert ist.

Derartige Antriebsrolleneinheiten werden beispielsweise zum Antrieb von auf Rollenförderbahnen und Kugelförderbahnen bewegbaren Frachtbehältern eingesetzt. Ein bevorzugtes Anwendungsgebiet sind Frachtladesysteme im Luftfrachtverkehr, bei denen die Behälter im Laderaum eines Flugzeugs auf Rollen oder Kugelförderbahnen an die vorgesehenen Verankerungsplätze transportiert werden.

Eine einfache Antriebsrolleneinheit für diesen Zweck ist beispielsweise aus der DE-A1-37 24 126 bekannt. Im Betrieb wird die Antriebsrolle dieser bekannten Antriebsrolleneinheit durch eine Elektromotoranordnung zunächst aus einer unteren Ruhestellung so weit angehoben, bis sie an der Unterseite des anzutreibenden Gegenstands anliegt, der auf der Förderbahn weiterbewegt werden soll. In dieser angehobenen Stellung wird die Antriebsrolle dann durch dieselbe Elektromotoranordnung in Drehung versetzt, so daß sie auf die Unterseite des Gegenstandes eine Tangentialkraft ausübt, die ihn in einer Richtung in Bewegung versetzt, welche in etwa senkrecht zur Richtung der Drehachse der Antriebsrolle verläuft.

Beim Einladen von Frachtbehältern bzw. Containern in Flugzeugfrachträume ergibt sich nun aber das Problem, daß die langgestreckten Container, die häufig länger sind als die Breite des Flugzeugfrachtraums, mit der einen ihrer Schmalseiten voraus durch eine seitliche Ladeluke des Flugzeugs in den Frachtraum hineingeschoben und dann zuerst um 90° gedreht werden müssen, damit sie mit ihrer Längsachse parallel zur Flugzeuglängsachse an die vorgesehenen Verankerungsplätze weiterbewegt werden können. Zur Einführung der Container durch die Ladeluke und zum Drehen um 90° war nach dem Stand der Technik beispielsweise im Bereich der Ladeluke der Boden des Frachtraums mit einer Kugelförderbahn ausgestattet, die eine allseitige Bewegung und Drehung des Containers gestattet. In dieser Kugelförderbahn war eine größere Anzahl von Antriebsrollen angeordnet, die zwischen einer Ruhestellung und einer Arbeitsstellung angehoben bzw. abgesenkt werden können und andererseits in die Arbeitsstellung drehend antreibbar sind. Durch entsprechende Steuerung mit komplizierten elektronischen Steuerungsanordnungen konnte mittels einer derartigen Anordnung der Container in die Ladeluke hinein und während dieser Bewegung zugleich um 90° gedreht werden. Dies erfolgte dadurch, daß die einzelnen Rollenantriebseinheiten selektiv angehoben und abgesenkt wurden, wobei sie im abgesenkten Zustand um eine vertikale Achse eine Drehung ausführten und im angehobenen Zustand den Container entsprechend ihrer Drehstellung vorwärts bewegten.

In der Praxis erweist sich eine derartige Anordnung als kompliziert und kostspielig; sie ist außerdem mit einem gerade im Luftfrachtverkehr unerwünscht hohen Gewicht behaftet und zeigt sich als störanfällig.

Eine weitere Möglichkeit besteht darin, insbesondere kleinere Container von Hand auf der im Bereich der Ladeluke angeordneten Kugelförderbahn zu bewegen und zu drehen. Anstelle von Kugelförderbahnen werden auch flächige Anordnungen aus Lenkrollen verwendet.

Bei all den vorstehend genannten Möglichkeiten ist entweder ein erheblicher Aufwand erforderlich oder es muß menschliche Arbeitskraft eingesetzt werden.

Eine Antriebsrolleneinheit der eingangs genannten Gattung ist in der europäischen Patentanmeldung EP-A-355 251 beschrieben, deren Inhalt als Stand der Technik nach Artikel 54 (3) EPÜ gibt. Diese Antriebsrolleneinheit weist zwei nebeneinander koaxial angeordnete Antriebsrollen auf, die von einer Elektromotoranordnung angetrieben und miteinander über ein Differentialgetriebe gekoppelt sind. Die Ausgleichszahnräder des Differentialgetriebes sind mit einem Bremsmoment beaufschlagt, das derart gewählt ist, daß in einem ersten Betriebszustand der Antriebsrolleneinheit eine quasi starre Kopplung zwischen den beiden Ausgängen des Differentialgetriebes vorhanden ist, die bewirkt, daß sich die beiden Antriebsrollen gleichsinnig und gleich schnell drehen. Sie wirken in diesem ersten Betriebszustand praktisch wie eine einzige Antriebsrolle, wie sie in der DE-A1-37 24 126 beschrieben ist. In diesem Betriebszustand verbleibt die Antriebsrolleneinheit der europäischen Patentanmeldung so lange, wie die Reaktionskräfte, die von dem anzutreibenden Gegenstand auf die beiden Antriebsrollen ausgeübt werden, ein durch die Bremsmomente an den Ausgleichszahnrädern des Differentialgetriebes vorgegebenes Maß nicht übersteigen. Diese Bremsmomente werden derart auf die Masse der anzutreibenden Gegenstände und auf die bei ihrer freien Bewegung auf der Förderbahn zu überwindenden Widerstände abgestimmt, daß die Antriebsrolleneinheit den erläuterten ersten Betriebszustand so lange beibehält, wie der anzutreibende Gegenstand nicht durch äußere Einwirkung sehr stark abgebremst bzw. in seiner bisherigen Bewegungsrichtung blockiert wird. Diese Abbremsung erfolgt beispielsweise automatisch dann, wenn der einzuladende Container so weit durch die seitliche Ladeluke in den Frachtraum hineingefahren worden ist, daß er auf der der Ladeluke gegenüberliegenden Seite an die Seitenwand des Flugzeugs bzw. an eine dort angebrachte Führungseinrichtung anstößt und sich daher in der bisherigen Richtung quer zum Frachtraum nicht mehr weiterbewegen kann.

Durch die dabei auftretende starke Abbremsung der Antriebsrolle werden die Bremsmomente an den Ausgleichszahnrädern des Differentialgetriebes überwunden und die bisherige quasi "starre" Kopplung zwischen den beiden Antriebsrollen wird aufgehoben. Die Antriebsrolleneinheit geht nun selbständig in den zweiten Betriebszustand über, in welchem die beiden Antriebsrollen beginnen, sich in entgegengesetzte Richtungen zu drehen, wie dies bei den Ausgängen eines Differential-bzw. Ausgleichgetriebes bekanntermaßen geschieht, wenn der eine der beiden Ausgänge festgehalten oder sehr stark abgebremst wird.

Die eine der Antriebsrollen behält in diesem zweiten Betriebszustand ihre bisherige Drehrichtung bei, während die andere Antriebsrolle beginnt, rückwärts zu laufen oder zum Stillstand zu kommen. Aufgrund dieser relativ gegenläufigen Drehbewegungen der weiterhin an die Unterseite des zu bewegenden Gegenstands bzw. Containers angedrückten Antriebsrollen entsteht ein Drehmoment um eine vertikale Achse, das wegen der drehbaren Lagerung der Antriebsrolleneinheit um eine vertikale Achse zu einer entsprechenden Drehbewegung führt, welche die Antriebsrolleneinheit in eine neue Winkelstellung zur Längsachse des Frachtraums bringt. Diese Drehbewegung hält so lange an, bis die Antriebsrolleneinheit eine Lage einnimmt, in der sich der Gegenstand wieder zumindest ein Stück weit ungehindert oder weniger stark gebremst in der durch die neue Winkelstellung der Antriebsrolleneinheit vorgegebenen Vorwärts-Bewegungsrichtung weiterbewegen kann, wobei der Gegenstand gleichzeitig etwas in die neue Antriebsrichtung der Antriebsrolleneinheit um die Vertikalachse gedreht wird. Da in dieser neuen Stellung die von außen her den Gegenstand stark abbremsenden bzw. an seiner Weiterbewegung völlig hindernden Kräfte wegfallen oder zumindest gemindert sind, übt der Gegenstand auf die Antriebsrolleneinheit geringere Reaktionskräfte aus, so daß die Antriebsrolleneinheit automatisch wieder in den ersten Betriebszustand zurückfällt, in dem sich die beiden Antriebsrollen in der gleichen Vorwärtsrichtung drehen. Dabei wird im allgemeinen noch keine vollständige Drehung des anzutreibenden Gegenstands um 90° erreicht worden sein. Vielmehr wird der vorstehend erläuterte Vorgang wiederholt, wobei der Gegenstand wiederum an der Laderaumwand bzw. an einem entsprechenden Anschlag anstößt und dadurch die Antriebsrolleneinheit wieder in den zweiten Betriebszustand übertritt und sich dadurch weiter um die vertikale Achse dreht.

Dieser Wechsel zwischen den beiden Betriebszuständen kann mehrfach erfolgen, bis der zu bewegende Gegenstand schließlich genügend weit, beispielsweise um 90° gedreht ist und sich in dieser neuen Lage ungehindert in Längsrichtung des Frachtraums bis zu dem vorgesehenen Verankerungsplatz weiterbewegen kann.

Die Drehung der Antriebsrolleneinheit gemäß dieser europäischen Patentanmeldung erfolgt also selbständig durch das Wechselspiel der aufeinander abgestimmten Bremsmomente des zu fördernden Gegenstands und der Ausgleichszahnräder des Differentialgetriebes, ohne daß hierfür von außen her mit Hilfe beispielsweise einer elektronischen Steuerung eingegriffen werden muß.

Allerdings ist diese Antriebsrolleneinheit gemäß der europäischen Patentanmeldung EP-A-355 251 durch das erforderliche Differentialgetriebe sehr aufwendig aufgebaut und mit vielen Teilen versehen, so daß sich nicht nur hohe Herstellungskosten ergeben, sondern auch ein hohes Gewicht und eine gewisse Störanfälligkeit.

Ausgehend von diesem Stand der Technik liegt der Erfindung die Aufgabe zugrunde, eine Antriebsrolleneinheit der eingangs genannten Art zu schaffen, die einfacher und kostengünstiger aufgebaut ist und ein geringeres Gewicht besitzt.

Erfindungsgemäß wird diese Aufgabe bei einer Antriebsrolleneinheit der eingangs genannten Art dadurch gelöst, daß das zweite Getrieberad mit dem ersten Getrieberad mittels einer Rutschkupplung gekoppelt ist, deren Kupplungsdrehmoment derart bemessen ist, daß sich die beiden Antriebsrollen so lange gleichsinnig drehen, solange sich der angetriebene Gegenstand im wesentlichen ungebremst bzw. ungehindert über die Antriebsrolleneinheit hinwegbewegen kann.

Bei dieser erfindungsgemäßen Ausgestaltung ist also vorgesehen, daß das erste Getrieberad entweder unmittelbar von der Elektromotoranordnung oder aber zur Drehzahlverminderung über ein Untersetzungsgetriebe von der Elektromotoranordnung angetrieben ist und seinerseits unmittelbar die erste Antriebsrolle antreibt. Dieses erste Getrieberad ist über eine Rutschkupplung mit dem zweiten Getrieberad verbunden, das seinerseits unmittelbar die zweite Antriebsrolle antreibt.

Solange im Betrieb der auf der Antriebsrolle ruhende und von ihr angetriebene Gegenstand mehr oder weniger frei beweglich ist, drehen sich bei dieser Anordnung die beiden Antriebsrollen gleichsinnig und mit gleicher Geschwindigkeit in ihrem ersten Betriebszustand.

Sobald aber der Gegenstand beispielsweise an der der Frachtraumluke gegenüberliegenden Wand eines Flugzeug-Frachtraums anstößt, wird auf die beiden Antriebsrollen durch den daraufliegenden Gegenstand ein starkes Bremsmoment ausgeübt. Dieses Bremsmoment ist so stark, daß die zweite Antriebsrolle derart stark abgebremst wird, daß das Kupplungsmoment der Rutschkupplung überwunden wird. Dadurch kann die zweite Antriebsrolle zum Stillstand kommen, während sich die erste Antriebsrolle bei durchrutschender Rutschkupplung in der bisherigen Drehrichtung weiterdreht. Dadurch dreht sich die Antriebsrolleneinheit in ihrer Halterung um die vertikale Achse, so daß die Antriebsrichtung des Gegenstandes leicht gedreht wird. In dieser neuen Antriebsrichtung kann sich nun der Gegenstand wiederum ein kleines Stück bewegen, er gleitet dabei an einer Führung bzw. an der Frachtraumwand entlang und dreht sich um eine vertikale Achse. Das auf die Antriebsrolle ausgeübte Bremsmoment ist dabei so stark vermindert, daß die Antriebsrolleneinheit aus ihrem zweiten Betriebszustand, in dem eine der Rollen stillsteht, wieder in den ersten Betriebszustand zurückgefallen ist, in dem sich die beiden Rollen gleichsinnig und mit gleicher Geschwindigkeit drehen. Sobald die Abbremsung des Gegenstands erneut zu stark wird, geht die Antriebsrolleneinheit wiederum in den zweiten Betriebszustand über, in dem sie sich erneut um die vertikale Achse dreht, so daß eine im Winkel gedrehte neue Antriebsrichtung für den Gegenstand entsteht.

Dieser Wechsel zwischen den beiden Betriebszuständen kann mehrfach erfolgen, bis der zu fördernde Gegenstand im gewünschten Maße gedreht ist, so daß er im Frachtraum ungehindert weiterbefördert werden kann.

Von Vorteil ist bei dieser erfindungsgemäßen Ausführungsform, daß im Vergleich zu dem eingangs erläuterten Stand der Technik das aufwendige und störanfällige Differentialgetriebe wegfallen kann und stattdessen eine wesentlich einfacher aufgebaute, störungsfreiere und kostengünstiger herstellbare Rutschkupplung tritt, die zudem ein geringeres Gewicht aufweist.

Bei einer besonders bevorzugten Ausführungsform ist vorgesehen, daß die Rutschkupplung nach Art einer Rollenreibungskupplung ausgebildet ist, welche eine Vielzahl von relativ zueinander drehbaren Kupplungsscheiben aufweist, zwischen denen jeweils eine Vielzahl von umfangsmäßig verteilten, jeweils im Winkel schräg zur Radialrichtung der Kupplungsscheiben angeordneten Kupplungsrollen angeordnet ist, wobei die Kupplungsscheiben und die dazwischen angeordneten Kupplungsrollen durch eine Federeinrichtung axial zusammengedrückt sind, und daß in Axialrichtung aufeinanderfolgend benachbarte Kupplungsscheiben abwechselnd mit dem ersten bzw. dem zweiten Getrieberad drehfest verbunden sind. Eine derartige Ausführung zeichnet sich durch besonders große Verschleißarmut aus, die bei dem vorgesehenen Einsatzzweck der Rutschkupplung besonders beachtet werden muß, da im zweiten Betriebszustand der Antriebsrolleneinheit ja ein längerdauerndes Durchrutschen der Rutschkupplung erfolgen muß.

Besonders vorteilhaft ist eine Ausführungsform, bei der vorgesehen ist, daß die Drehachsen der beiden Antriebsrollen zueinander parallel sind, wobei als Sonderfall vorgesehen werden kann, daß die Drehachsen der beiden Antriebsrollen miteinander fluchtend koaxial sind und daß die beiden Antriebsrollen die Außenform von Kreiszylindern mit gleichem Durchmesser besitzen.

Eine besonders kompakte Bauform läßt sich dadurch erzielen, daß die Elektromotoranordnung, die Getriebeanordnung und die Rutschkupplung im Inneren der als Hohlkörper ausgebildeten Antriebsrollen angeordnet sind.

Besonders bevorzugt, weil sehr einfach aufgebaut, ist eine Ausführungsform, bei der der Rotor der Elektromotoranordnung über ein Untersetzungsgetriebe das mit einem Innenzahnkranz der ersten Antriebsrolle kämmende, als Zahnrad ausgebildete erste Getrieberad antreibt, während das erste Getrieberad mit dem Eingang der Rutschkupplung verbunden ist, und wobei der Ausgang der Rutschkupplung das als Zahnrad ausgebildete zweite Getrieberad antreibt, welches mit einem Innenzahnkranz der zweiten Antriebsrolle kämmt.

Eine besondere Vereinfachung der Steuerung ist bei einer erfindungsgemäßen Antriebsrolleneinheit gegeben, bei der vorgesehen ist, daß die Antriebsrolleneinheit derart ausgebildet ist, daß sich ihre beiden Antriebsrollen beim Einschalten der Elektromotoranordnung selbsttätig aus einer unteren Ruhestellung in eine obere Antriebsstellung anheben, in der sie mit der Unterseite des anzutreibenden Gegenstands im Eingriff stehen.

Als vorteilhaft erweist sich eine Weiterbildung, bei der der im Betrieb mit der Stromzufuhr zu verbindende Stator der Elektromotoranordnung konzentrisch innerhalb des drehbar gelagerten Rotors der Elektromotoranordnung angeordnet und starr und drehfest mit der Halterung verbunden ist. Auf diese Weise läßt sich die Stromzufuhr zur Elektromotoranordnung ohne eine aufwendige Schleifkontaktanordnung erzielen, die beim Stand der Technik gemäß der europäischen Patentanmeldung EP-A-355 251 erforderlich ist.

Bei einer bevorzugten Ausführungsform ist vorgesehen, daß die Elektromotoranordnung den Eingang eines Planetengetriebes antreibt, dessen einer Ausgang das erste Getrieberad antreibt und dessen zweiter Ausgang den Rollenträger drehend antreibt.

Vorteilhafterweise sieht man dabei vor, daß der Eingang des Planetengetriebes ein mit der Rotorwelle der Elektromotoranordnung drehfest verbundenes Sonnenrad ist, daß der eine Ausgang des Planetengetriebes ein mit dem ersten Getrieberad drehfest verbundener Planetenträger ist und daß der andere Ausgang ein drehfest am Rollenträger angebrachter Innenzahnkranz ist, der das Kronenrad des Planetenträgers darstellt. Bei dieser Ausgestaltung wird erreicht, daß sich die Rollenantriebseinheit beim Einschalten der Elektromotoranordnung selbsttätig aus der unteren Ruhestellung in die obere Antriebsstellung dreht, wie dies auch bei der Rollenantriebseinheit der europäischen Patentanmeldung EP-A-355 251 der Fall ist.

Die Erfindung wird im folgenden beispielsweise unter Bezugnahme auf die Zeichnung näher erläutert; es zeigt:

Fig. 1 und 2 eine schematische Draufsicht auf einen Teil eines Flugzeugladeraums, durch dessen Ladeluke ein Container in den Laderaum hineinbewegt wird;

Fig. 3 eine sehr vereinfachte schematisierte Darstellung einer Antriebsrolleneinheit zur Erläuterung des erfindungsgemäßen Aufbaus und Funktionsprinzips;

Fig. 4 eine perspektivische Darstellung einer praktischen Ausführungsform der Antriebsrolleneinheit, wobei die von den Antriebsrollen umschlossene Baueinheit aus der Halterung herausgehoben ist;

Fig. 5 die Antriebsrolleneinheit der Fig. 4 im zusammengebauten Zustand; und

Fig. 6 eine in Einzelheiten vereinfachte axiale Schnittdarstellung der praktischen Ausführungsform der Antriebsrolleneinheit gemäß den Fig. 4 und 5.

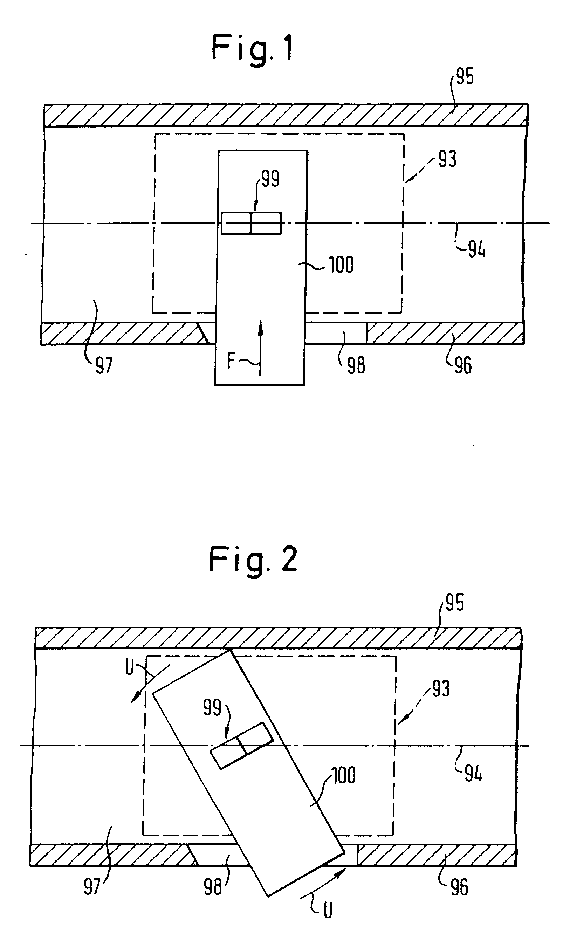

In den Fig. 1 und 2 ist eine Anwendungssituation einer erfindungsgemäßen Antriebsrolleneinheit dargestellt.

Die Fig. 1 und 2 zeigen in schematisierter Draufsicht den Eingangsbereich des Frachtladeraums 97 eines Flugzeugs, in den ein Container 100 eingeladen werden soll. Zunächst wird der Container 100 auf einer nicht dargestellten Rollenförderbahn oder einer Kugelförderbahn herangeführt und in die Ladeluke 98 des Frachtladeraums 97 hineinbewegt. Im Bereich der Ladeluke 98 ist der Boden des Frachtladeraums 97 beispielsweise mit einer Kugelförderbahn oder einer anderen Förderbahn ausgestattet, die eine allseitige Bewegung des Containers 100 gestattet. In den Fig. 1 und 2 ist der Bereich der Kugelförderbahn 93 als gestricheltes Rechteck angedeutet.

Auf dieser Kugelförderbahn kann der Container 100 zunächst mit verhältnismäßig geringem Kraftaufwand senkrecht zur Flugzeuglängsachse in den Frachtladeraum 97 hineinbewegt werden, wie durch den Pfeil F in der Fig. 1 gezeigt. Im Bereich der Kugelförderbahn 93 ist mindestens eine, vorzugsweise aber mehrere erfindungsgemäße Antriebsrolleneinheiten 99 angeordnet, von denen in den Fig. 1 und 2 die wenigstens eine symbolisch gezeigt ist.

Wie die Fig. 1 zeigt, wird also der Container 100 zuerst in Richtung des Pfeiles F mit seiner Schmalseite voraus, d.h. mit seiner Längsrichtung senkrecht zur Flugzeuglängsachse 94 durch die Ladeluke 98 in den Frachtraum 97 hineinbewegt. Die Länge des Containers 100 in dieser Bewegungsrichtung ist jedoch größer als die Breite des Frachtraums 97, d.h. größer als der lichte Abstand zwischen der in den Fig. 1 und 2 unten liegenden vorderen Seitenwand 96 des Flugzeugrumpfes und der oben liegenden hinteren Seitenwand 95. Der Container 100 muß also um eine oder mehrere vertikale Achsen in Richtung der Pfeile U in der Fig. 2 gedreht werden, damit er sich durch die Ladeluke 98 hindurchbewegen und im Inneren des Laderaums 97 mit seiner Längsachse parallel zur Flugzeuglängsachse 94 ausrichten kann.

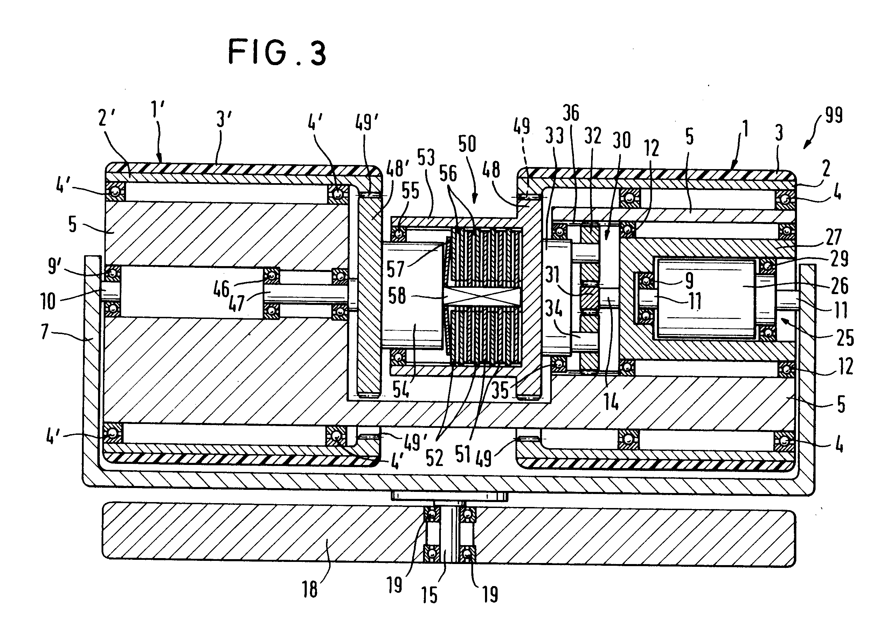

Bevor nun beschrieben wird, wie sowohl das Hineinbewegen des Containers 100 in den Frachtraum 97 in Richtung des Pfeiles F als auch seine Drehung um 90° mit Hilfe einer oder mehrerer erfindungsgemäßer Antriebsrolleneinheiten 99 erfolgt, wird zuerst deren prinzipieller Aufbau anhand der schematischen Darstellung der Fig. 3 erläutert.

Wie in der sehr stark schematisierten Darstellung der Fig. 3 gezeigt ist, umfaßt die Antriebsrolleneinheit 99 zwei koaxial nebeneinander angeordnete Antriebsrollen 1, 1' gleichen Durchmessers, von denen jede aus einem inneren, im wesentlichen als Hohlzylinder ausgebildeten Rollenkörper 2, 2' und einem die Außenfläche des Rollenkörpers 2, 2' bedeckenden Rollenmantel 3, 3' aus abriebfestem elastischem Material besteht.

Die beiden Antriebsrollen 1, 1' sind mit Hilfe von Lagern 4, 4', die, wie alle im folgenden erwähnten Lager als Wälzlager, beispielsweise als Nadellager oder Kugellager ausgebildet sein können, auf der kreiszylindrischen Außenfläche eines Rollenträgers 5 und konzentrisch zu dieser Außenfläche drehbar gelagert.

Wie die Fig. 3 zeigt, ist der Rollenträger 5 in einer im dargestellten Querschnitt U-förmigen, nach oben offenen Halterung 7 drehbar gelagert. Das in der Fig. 3 linke axiale Ende des Rollenträgers 5 ist über ein Lager, vorzugsweise ein Wälzlager 9' auf einem fest mit der Halterung 7 verbundenen Achsstummel 10 drehbar gelagert. Dieser Achsstummel ist exzentrisch zu der kreiszylindrischen Außenoberfläche des Rollenträgers 5 angeordnet, auf dem die Antriebsrolle 1' drehbar gelagert ist. Die Drehachse des Rollenträgers 5 bezüglich der Halterung 7 um den Achsstummel 10 herum ist also exzentrisch zur Drehachse der Antriebsrolle 1' angeordnet.

Der in der Fig. 3 rechte Teil des Rollenträgers 5 ist von einer zum Achsstummel 10 konzentrischen Bohrung durchsetzt, in der eine Elektromotoranordnung 25 aufgenommen ist. Diese Elektromotoranordnung 25 umfaßt einen über eine Statorwelle 11 starr und drehfest mit der Halterung 7 verbundenen Stator 26, der die Feldwicklung der Elektromotoranordnung umfaßt, die über feste Leitungen mit der mit der Halterung verbundenen Stromversorgung verbunden ist (nicht dargestellt). Dieser Stator 26 ist konzentrisch von einem Rotor 27 umgeben, der auf den beiden axialen Enden der Statorwelle 11 mittels der Lager 9 bzw. 29 drehbar gelagert ist, sich also bezüglich der Halterung 7 drehen kann.

Der außenliegende Rotor 27 der Elektromotoranordnung 25 ist überdies an der inneren Wand der die rechte Hälfte des Rollenträgers 5 durchsetzenden Bohrung mittels der Lager 12 drehbar gelagert, so daß sich der Rotor 27 relativ zum Rollenträger 5 drehen kann.

Die Mittel- bzw. Drehachsen des Achsstummels 10, der Statorwelle 26, sowie die Rotordrehachse und die Längsachse der den rechten Teil des Rollenträgers 5 durchsetzenden Bohrung fluchten miteinander und erstrecken sich parallel aber exzentrisch zur Achse der kreiszylindrischen Außenoberfläche des Rollenträgers 5 und damit auch der auf dieser Außenoberfläche gelagerten Antriebsrollen 1 und 1'.

Wird also der Rollenträger 5 bezüglich der Halterung 7 gedreht, so schwenkt er zusammen mit den auf ihm gelagerten Antriebsrollen 1, 1' nach Art eines Exzenters aus der in der Fig. 3 gezeigten unteren Ruhestellung nach oben in die Antriebsstellung, in welcher die Antriebsrollen 1, 1' am Boden des zu fördernden Gegenstands bzw. Containers 100 angedrückt sind.

In der Mitte ihrer Unterseite ist die Halterung 7 fest mit einer vertikal nach unten abstehenden Welle 15 verbunden, die in einer Basis 18 mittels der Lager 19 um ihre vertikale Achse drehbar gelagert ist.

Das in der Fig. 3 linke axiale Ende des Rotors 27 der Elektromotoranordnung 25 ist mit einer konzentrisch zur Statorwelle 11 angeordneten Rotorwelle 14 versehen, deren linkes axiales Ende das Sonnenrad 31 eines als Planetengetriebe ausgebildeten Untersetzungsgetriebes 30 drehfest trägt. Dieses Untersetzungsgetriebe ist als herkömmliches Planetengetriebe ausgebildet und umfaßt mehrere mit dem Sonnenrad 31 kämmende Planetenräder 32, die drehbar auf Lagerbolzen 34 eines Planetenträgers 33 gelagert sind und mit einem in der Bohrung des Rollenträgers 5 geformten Innenzahnkranz 36 als Kronenrad des Planetengetriebes in kämmendem Eingriff stehen. Der Planetenträger 33 ist in der Bohrung des Rollenträgers 5 um eine zu der Rotorwelle 14, der Statorwelle 11 und der Bohrungsachse konzentrische Drehachse mittels der Lager 35 drehbar gelagert.

Das in der Fig. 3 linke axiale Stirnende des Planetenträgers 33 ist drehfest mit einem als Zahnrad ausgebildeten ersten Getrieberad 48 verbunden, welches konzentrisch zur Drehachse des Planetenträgers 33 angeordnet ist und mit einem an der Innenseite der hohlzylindrischen Antriebsrolle 1 geformten Innenzahnkranz 49 in kämmendem Eingriff steht.

Im Inneren des rechten axialen Endes der links in der Fig. 3 angeordneten Antriebsrolle 1' ist ebenfalls ein Innenzahnrad 49' geformt, das mit einem ebenfalls als Zahnrad ausgebildeten zweiten Getrieberad 48' in kämmendem Eingriff steht. Dieses zweite Getrieberad 48' ist mittels ihrer Welle 47 über die Lager 46 in einer Bohrung im linken Teil des Rollenträgers 5 drehbar gelagert. Die Drehachse des zweiten Getrieberades und mithin die Welle 47 sind konzentrisch zum Achsstummel 10 angeordnet, also wiederum exzentrisch zur Außenoberfläche des Rollenträgers 5 und zu den Außenoberflächen der Antriebsrollen 1 und 1'.

Zwischen dem ersten Getrieberad 48 und dem zweiten Getrieberad 48' ist eine Rutschkupplung 50 angeordnet, welche diese beiden Getrieberäder miteinander in vorbestimmter Weise und mit einem vorbestimmten Kupplungsmoment koppelt.

Die Rutschkupplung 50 ist nach Art einer Rollenreibungsbremse bzw. Rollenreibungskupplung ausgebildet, wie sie im einzelnen in der bereits eingangs genannten DE-A1-37 24 126 erläutert ist.

Diese als Rutschkupplung 50 dienende Rollenreibungskupplung umfaßt, wie in der Fig. 3 gezeigt ist, ein topfartiges Gehäuse 53, dessen Öffnung nach links weist und dessen Boden starr und drehfest mit dem ersten Getrieberad 48 verbunden ist bzw. einstückig mit diesem ausgebildet ist. In das linke offene Ende des Gehäuses 53 hinein ragt eine starr und drehfest mit dem zweiten Getrieberad 48' verbundene Welle, die an ihrem axial rechten Ende einen Vierkantansatz 58 drehfest trägt, dessen "Durchmesser" wesentlich kleiner ist als der der Welle 54, so daß an dem rechten axialen Ende der Welle 54 am Übergang zum Vierkant eine radiale Anschlagschulter gebildet ist. In dem den Vierkant 58 umgebenden rechten Teil des topfartigen Gehäuses 53 ist eine Vielzahl von axial parallel nebeneinander und radial ausgerichteten Kupplungsscheiben 51 und 52 abwechselnd aufeinanderfolgend angeordnet.

Die ersten Kupplungsscheiben 51, also jede zweite der aufeinanderfolgenden Kupplungsscheiben sind drehfest, jedoch axial verschiebbar auf dem Vierkant 58 angeordnet, während die zwischen den Kupplungsscheiben 51 liegenden Kupplungsscheiben 52 an ihrem Außenumfang drehfest und axial verschiebbar mit dem Gehäuse 33 verbunden sind. Diese drehfeste und axial verschiebbare Verbindung mit dem Gehäuse 53 kann beispielsweise durch einen polygonalen Außenumfang der Kupplungsscheiben 52 erfolgen, oder durch radial nach außen ragende Nasen, die in der Innenfläche des topfartigen Gehäuses 53 in Axialrichtung gebildete Nuten eingreifen.

Jeweils zwischen zwei benachbarten Kupplungsscheiben 51, 52 ist jeweils eine Vielzahl von in Umfangsrichtung gleichmäßig verteilten, zum Radius einer Kupplungsscheibe schräg angeordneten Kupplungsrollen 56 angeordnet. Das ganze Paket aus der Vielzahl von Bremsscheiben 51, 52 und den dazwischenliegenden Kupplungsrollen 56 wird mittels einer als Tellerfeder ausgebildeten Federanordnung 57 gegen die axial rechte Innenwand des topfartigen Gehäuses 53 zusammengepreßt.

Da derartige Rollenreibungskupplungen an sich bekannt sind, mag die vorstehende kurze Beschreibung für den Fachmann genügen.

Als wesentlich ist hervorzuheben, daß eine derartige Rutschkupplung auch bei fortgesetztem Rutschbetrieb äußerst verschleißarm arbeitet und zudem durch Einstellung der Federvorspannung der Federeinrichtung 57 ein wohldefiniertes Kupplungsmoment erzielbar ist, das sich auch bei Temperaturänderungen oder sonstigen Außeneinflüssen kaum ändert.

Da die Drehachsen der beiden Getrieberäder 48 und 48′ konzentrisch fluchtend zueinander angeordnet sind, muß natürlich auch die Welle 54, auf der das linke Ende des Gehäuses 53 der Rutschkupplung 50 mittels der Lager 55 drehbar gelagert ist, konzentrisch zu den Drehachsen der Getrieberäder, des Achsstummels 10 und der Statorwelle 11 sein.

Für den eingangs erwähnten ersten Betriebszustand der Antriebsrolleneinheit, in welchem das Kupplungsmoment der Rutschkupplung 50 durch die vom geförderten Container ausgeübten Kräfte nicht überwunden wird, so daß sich die beiden Antriebsräder 48, 48′ gleichsinnig und mit der gleichen Geschwindigkeit drehen, kann man die in der Fig. 3 dargestellte Anordnung so betrachten, als wären die Rollenkörper 2, 2′ der beiden Antriebsrollen 1, 1′ drehfest miteinander verbunden und über einen einzigen Innenzahnkranz 49 oder 49′ von einem einzigen Getrieberad 48 oder 48′ angetrieben, das seinerseits von der Elektromotoranordnung 25 angetrieben wird. In diesem Betriebszustand entspricht die Anordnung der Fig. 3 funktionsmäßig der Antriebsrolleneinheit, wie sie in der DE-A1-3724126 ausführlich beschrieben ist, deren Inhalt in vollem Umfang in die Offenbarung der vorliegenden Anmeldung einbezogen wird.

In dem gerade betrachteten ersten Betriebszustand arbeitet die Anordnung gemäß der vorliegenden Erfindung also in der gleichen Weise wie die Antriebsrolleneinheit der DE-A1-3724126

Wenn ausgehend von der in der Fig. 3 wiedergegebenen Ruhestellung die Stromzufuhr zum Stator 26 der Elektromotoranordnung eingeschaltet wird, so wirkt zwischen dem Rotor 27 und dem Stator 26 wie bei jedem anderen Elektromotor ein Drehmoment. Wegen der erheblichen Eigenträgheit der Antriebsrollen 1 und 1′, oder wegen des darauf lastenden Containers bewirkt die einsetzende Rotation des Rotors 27, daß sich die Planetenräder bei zunächst stillstehendem Planetenträger 33, der ja durch die Antriebsrolle 1 abgebremst wird, zu drehen beginnen und durch ihren kämmenden Eingriff mit der Innenverzahnung 36 des Rollenträgers diesen um seine Drehachse drehen, so daß wegen der exzentrischen Lagerung des Rollenträgers 5 die darauf gelagerten Antriebsrollen 1 aus der in der Fig. 3 gezeigten unteren Ruhestellung in die obere Antriebsstellung geschwenkt werden. Diese Schwenkbewegung endet, wenn die Antriebsrollen 1, 1′ am Boden des zu fördernden Gegenstands ankommen und gegen diesen gedrückt werden. Wegen des Gewichts dieses Containers 100 wird die nach oben gerichtete Schwenkbewegung der Antriebsrollen 1, 1′ blockiert, so daß sich der Rollenträger 5 nicht mehr weiterdrehen kann. Dies hat zur Folge, daß sich nun notwendigerweise die Planetenräder auf dem als Kronenrad des Planetengetriebes 30 dienenden Innenzahnkranz 36 abwälzen müssen, wobei sie den Planetenträger 33 in Drehung versetzen. Der Planetenträger ist drehfest mit dem ersten Getrieberad 48 verbunden, das in kämmendem Eingriff mit dem Innenzahnkranz 49 nun die Antriebsrolle 1 drehend antreibt. Die Drehung der Antriebsrolle, die gegen die Unterseite des Containers 100 angedrückt ist, übt eine Tangentialkraft auf den Container 100 aus, so daß sich dieser, wie in der Fig. 1 angedeutet, in Richtung des Pfeiles F in Bewegung setzt bzw. weiterbewegt.

Solange der Container sich frei bewegen kann, also keine übermäßigen Bremskräfte auf die Antriebsrolleneinheit ausübt, wird die Drehbewegung des ersten Getrieberades 48 über die Rutschkupplung 50 wie von einer starren Verbindung auf das zweite Getrieberad 48′ übertragen, das die zweite Antriebsrolle 1′ gleichsinnig mit der ersten Antriebsrolle 1 drehend antreibt.

In diesem eben beschriebenen ersten Betriebszustand, in dem sich die beiden Antriebsrollen 1, 1′ mit gleicher Geschwindigkeit und gleichsinnig drehen und so den Container 100 wie eine einzige Antriebsrolle vorwärtstreiben, bleibt die erfindungsgemäße Antriebsrolleneinheit 99 so lange, bis der Drehbewegung der beiden Antriebsrollen 1, 1′ vom Container so große Kräfte entgegengesetzt werden, daß das Kupplungsmoment der Rutschkupplung 50 überschritten wird. Dies geschieht beispielsweise dann, wenn sich der Container 100 nicht mehr in Richtung des Pfeiles F in der Fig. 1 weiterbewegen kann, weil er mit seinem vorderen Stirnende an der hinteren Seitenwand 95 des Laderaums 97 oder einem dort angebrachten Führungsanschlag anstößt. Sobald durch die am Container auf die zweite Antriebsrolle 1′ einwirkenden Kräfte das Kupplungsmoment der Rutschkupplung 50 überwinden, geht die Antriebsrolleneinheit 99 in den zweiten Betriebszustand über, in welchem die zweite Antriebsrolle 1′ zum Stillstand kommt, weil die Rutschkupplung vom ersten Getrieberad auf das zweite Getrieberad keine genügend große Kraft übertragen kann, sondern in den durchrutschenden Betriebszustand übergeht. Die erste Antriebsrolle behält jedoch ihre Drehbewegung bei, so daß sich nun die Antriebsrolleneinheit 99 um die vertikale Achse ihrer Halterung 7 drehen muß, da die Antriebsrolle 1 exzentrisch zur Drehachse 15 der Halterung 7 angeordnet ist. Die Antriebsrolleneinheit 99 dreht sich dabei in der Draufsicht der Fig. 1 und 2 ein Stück entgegen dem Uhrzeigersinn um die Welle 15. Die erreichte neue Drehstellung, die nun entgegen dem Uhrzeigersinn aus der bisherigen Richtung heraus zur Längsachse des Frachtraums hin gerichtet ist, bewirkt, daß am Boden des daraufliegenden Containers die Kräfte in einer entgegen dem Uhrzeigersinn gedrehten Richtung angreifen, in der dem Container geringere Blockierungs- bzw. Bremskräfte entgegenwirken. Dadurch übt der Container auch auf die Antriebsrolleneinheit geringere Reaktionskräfte aus, so daß das Kupplungsmoment der Rutschkupplung 50 wieder unterschritten wird und die Antriebsrolleneinheit 99 in den ersten Betriebszustand zurückfällt. Dadurch drehen sich die beiden Antriebsrollen 1, 1' wieder gleichsinnig in der gleichen Richtung und treiben den Container 100 in der neuen schräggestellten Richtung vorwärts, wobei er mit seiner rechten vorderen Kante an der Laderaumseitenwand 95 entlanggleitet und sich dabei in Richtung der Pfeile U dreht, wie dies in der Fig. 2 gezeigt ist.

Der Container 100 wird in dieser neuen Bewegungsrichtung durch die im ersten Betriebszustand arbeitende Antriebsrolleneinheit 99 so lange vorgeschoben, bis er mit seiner rechten vorderen Kante an der Seitenwand 95 wieder so stark abgebremst wird, daß auch die Antriebsrolle 1' wieder derart stark abgebremst wid, daß die Antriebsrolleneinheit 99 in der gleichen Weise in den zweiten Betriebszustand übergeht, wie dies bereits oben erläutert wurde. Dadurch dreht sie sich wiederum ein weiteres Stück entgegen dem Uhrzeigersinn um ihre vertikale Achse. In der neuen Drehstellung nimmt die Bremswirkung des Containers 100 wiederum ab und die Antriebsrolleneinheit 99 geht dadurch wieder in den ersten Betriebszustand zurück und treibt den Container 100 in der neuen Drehstellung an, bis er wiederum stark abgebremst wird. Der beschriebene Wechsel zwischen dem ersten und dem zweiten Betriebszustand wiederholt sich mehrfach, bis die Längsachse des Containers 100 schließlich parallel zur Flugzeuglängsachs 94 bzw. zur hinteren Seitenwand 95 verläuft und der Container 100 in dieser Richtung im Laderaum 97 ungehindert an die gewünschte Stelle bewegt werden kann.

Wenn die Stromzufuhr zur Elektromotoranordnung 25 abgeschaltet wird, so kommt der Rotor 27 zum Stillstand und der Rollenträger 5 und die auf ihm gelagerten Antriebsrollen 1, 1' sinken aufgrund ihres exzentrisch gelagerten Eigengewichts durch Schwenkbewegung um die Statorwelle 11 bzw. den Achsstummel 10 herum wieder nach unten in die in der Fig. 3 gezeigte Ruhestellung, in der die Antriebsrollen 1, 1' an der Unterseite des Behälters 100 nicht mehr angepreßt sind.

Die Rückdrehung der Antriebsrolleneinheit 99 aus ihrer nun etwa quer zur Flugzeuglängsachse 94 liegenden Stellung in die Ausgangsstellung kann in beliebiger Weise herbeigeführt werden. Dem Fachmann steht hier eine Vielzahl von Möglichkeiten offen. Beispielsweise kann die Rückdrehung durch eine in der Zeichnung nicht dargestellte Feder erfolgen, welche die Antriebsrolleneinheit 99 zur Rückkehr in die Ausgangsstellung gemäß Fig. 1 vorspannt.

Bei der vorstehenden Beschreibung und auch bei der schematischen Darstellung der Fig. 3 wurde davon ausgegangen, daß bereits ein Container auf der Antriebsrolleneinheit aufliegt, wenn diese eingeschaltet wird. In diesem Fall werden die Antriebsrollen 1, 1' genügend stark abgebremst, um ein Hochschwenken in die Arbeitsstellung bzw. ein Hochpressen gegen den Boden des Containers zu bewirken.

Falls in der Praxis gewünscht ist, daß diese Schwenkbewegung aus der Ruhestellung in die Arbeitsstellung auch dann auftritt, wenn kein Container auf der Antriebsrolleneinheit aufliegt, kann eine Bremse zwischen der Halterung 7 und einer der beiden Antriebsrolleneinheiten 1' oder 1 vorgesehen werden, die dann die gleiche Funktion wie der aufliegende Container 100 erfüllt.

Das als "Untersetzungsgetriebe" 30 bezeichnete Planetengetriebe erfüllt bei der erfindungsgemäßen Antriebsrolleneinheit eine doppelte Funktion. Einerseits vermindert dieses Planetengetriebe als Untersetzungsgetriebe 30 die hohe Drehzahl des Rotors 27 der Rollenantriebseinheit, andererseits sorgt es aber auch dafür, daß die Schwenkbewegung des Rollenträgers 5 beim Einschalten der Elektromotoranordnung 25 herbeigeführt wird, wie dies vorstehend erläutert wurde.

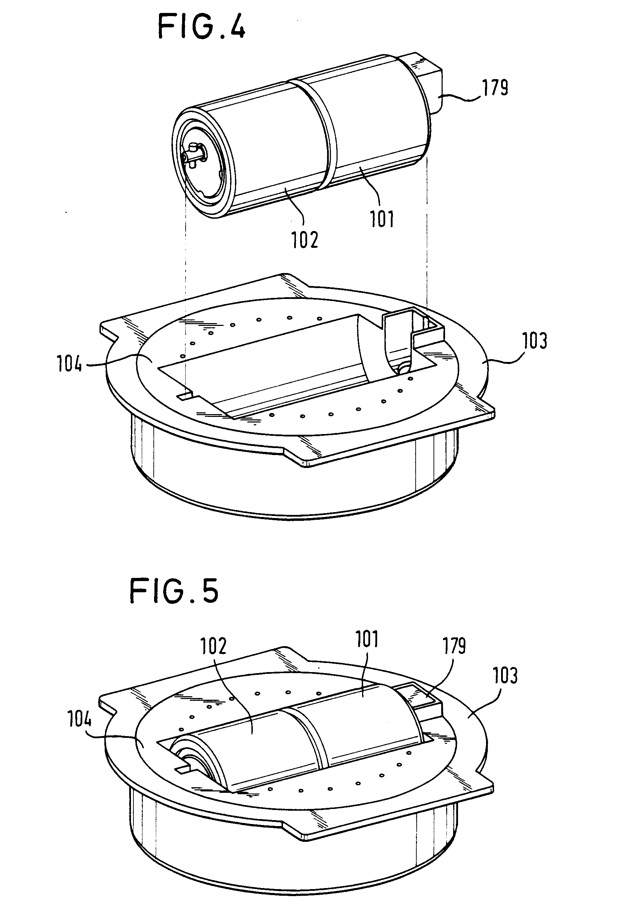

Nachstehend wird nun mit Bezug auf die Fig. 4 bis 6 eine in vielen Einzelheiten vereinfacht dargestellte praktische Ausführungsform einer erfindungsgemäßen Antriebsrolleneinheit beschrieben. Da diese Ausführungsform in vielen konstruktiven Details der in der europäischen Patentanmeldung 89 102 955.5 beschriebenen Antriebsrolleneinheit ähnlich ist, wird hiermit ausdrücklich auf die Offenbarung dieser europäischen Patentanmeldung verwiesen, die als Bestandteil der gegenwärtigen Beschreibung betrachtet sein soll.

Wie die Fig. 4 bis 6 zeigen, weist die Antriebsrolleneinheit zwei axial fluchtend konzentrisch zueinander angeordnete Antriebsrollen 101 und 102 gleichen Außendurchmessers auf, die um ihre gemeinsame horizontale Achse drehbar in einer Halterung 104 gelagert sind. Wie die Fig. 4 und 5 zeigen, ist die Halterung 104 in Draufsicht kreisförmig ausgestaltet und in einem als Basis dienenden Gehäuse 103 um eine vertikale Achse drehbar gelagert. Dieses Gehäuse 103 ist topfförmig gestaltet und besitzt einen horizontalen Umfangsflansch zur Verankerung in einem entsprechend geforten Ausschnitt im Boden eines Frachtladeraums. Die Halterung 104 besitzt einen zentrisch nach unten ragenden Lagerstutzen 173, der mittels zweier Wälzlager 174 in einer zentralen Öffnung 172 des Gehäuses 103 um eine vertikale Achse drehbar gelagert ist.

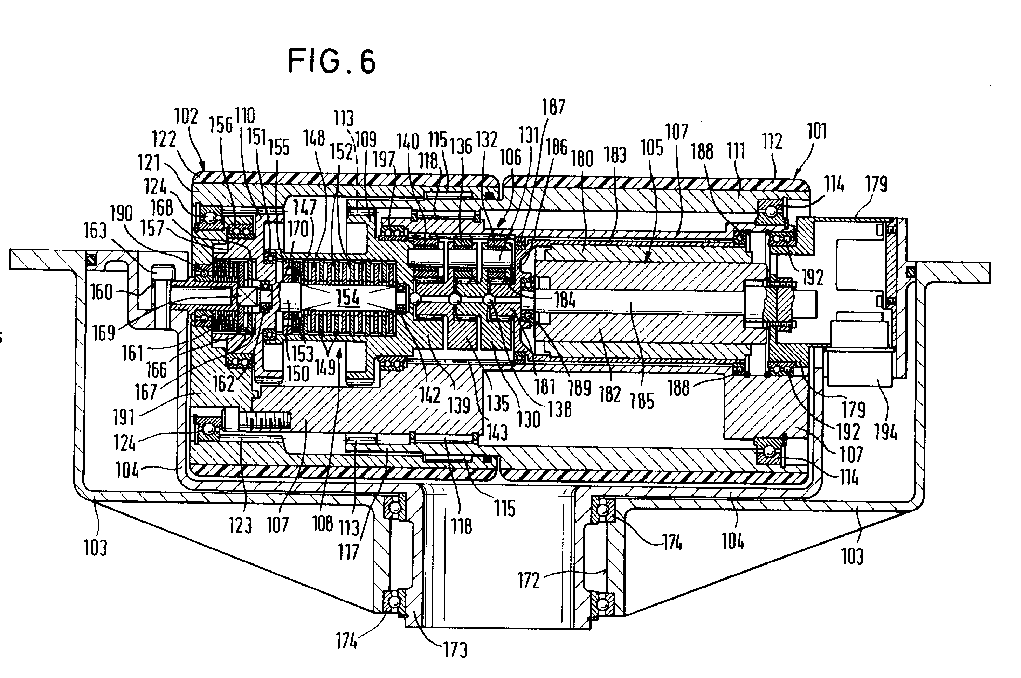

Wie insbesondere im axialen Längsschnitt der Fig. 6 gezeigt ist, umfaßt die Antriebsrolleneinheit die beiden in etwa hohlzylindrisch ausgebildeten und axial nebeneinander angeordneten äußeren Antriebsrollen 101 und 102, eine im Innenraum dieser Antriebsrollen 101 und 102 aufgenommene Elektromotoranordnung 105, ein sich links axial anschließendes Untersetzungsgetriebe 106 und eine wiederum sich links axial anschließende Rutschkupplung 108.

Die Elektromotoranordnung 105 umfaßt einen eine Statorwicklung enthaltenden Stator 182, der fest mit einer ihn tragenden Statorwelle 185 verbunden ist, die an ihrem in der Fig. 6 rechten axialen Ende starr und drehfest an einem Anschlußgehäuse 179 befestigt ist, das seinerseits starr an der Halterung 104 befestigt oder mit dieser einstückig ausgebildet ist. Über dieses Anschlußgehäuse, das mit einem Stecker 194 ausgestattet ist, ist die Feldwicklung des Stators 182 fest mit der Stromversorgung der Basis verbunden.

Der Stator 182 ist in üblicher Weise rotationssymmetrisch ausgestaltet und konzentrisch im Inneren eines ihn außen umgebenden Rotors 180 angeordnet. Dieser Rotor 180 ist seinerseits von einem fest mit ihm verbundenen Rotorgehäuse umgeben, das über die Wälzlager 188 und 187 in einer Bohrung eines die Motoranordnung 105 umhüllenden Rollenträgers 107 drehbar gelagert ist. An dem in der Fig. 6 linken axialen Ende trägt das Rotorgehäuse 183 einen radialen Lagerflansch 186, der mit einem Wälzlager 189 auf dem linken axialen Ende der Statorwelle 185 drehbar gelagert abgestützt ist. Die Anordnung der die Elektromotoranordnung 105 enthaltenden Bohrung des Rollenträgers 107 ist dabei derart getroffen, daß die Drehachse des Rotors 180 und auch die Statorwelle exzentrisch zu Oberflächenbereichen des Rollenträgers angeordnet ist, auf denen die beiden Antriebsrollen 101 und 102 drehbar gelagert sind.

Wie bereits erwähnt, ist die Elektromotoranordnung von einem Rollenträger umgeben, der als Hohlkörper ausgebildet ist und nicht nur die Elektromotoranordnung 105 sondern auch das Untersetzungsgetriebe 106, die Rutschkupplung 108 und eine noch später näher zu erläuternde Bremse enthält. Der Rollenträger 107 ist an seinem in der Fig. 6 rechten axialen Ende mittels des Wälzlagers 192 konzentrisch zur Drehachse der Rotorwelle 181 der Elektromotoranordnung 105 drehbar an dem fest mit der Halterung 104 verbundenen Anschlußgehäuse 179 gelagert. An seinem in der Fig. 6 linken axialen Ende ist der Rollenträger 107 über ein Wälzlager 190 auf einem Lagerzapfen 160 konzentrisch zur Rotorwelle 181 der Elektromotoranordnung 105 drehbar gelagert. Dieser Lagerzapfen 160 ist starr und drehfest mittels eines Bolzens 163 mit der Halterung 104 verbunden. Auf diese Weise ist der Rollenträger 107 exzentrisch zu seinen die beiden Antriebsrollen 101 und 102 lagernden Flächenbereichen drehbar an der Halterung 104 gelagert, so daß er bei Drehung nach Art eines Exzenters nach oben schwenkt.

Die beiden Antriebsrollen 101 sind jeweils im wesentlichen als hohle Kreiszylinder ausgebildet und umgeben den Rollenträger 107 konzentrisch. Die in der Fig. 6 rechts angeordnete erste Antriebsrolle 101 besteht aus einem Rollenmantel 112 aus abriebfestem elastischem Material und einem diesen Rollenmantel tragenden Rollenkörper 111 aus Metall. Der Rollenkörper 111 besitzt an seinem in der Fig. 6 linken Bereich einen Abschnitt verminderten Durchmessers 117, wobei am linken axialen Ende an der Innenseite dieses Abschnitts 117 mit vermindertem Durchmesser ein Innenzahnkranz 113 geformt ist, der entweder einstückig mit dem Rollenkörper 111 ausgebildet oder an diesem starr befestigt ist. Die erste Antriebsrolle 101 ist im Bereich ihres Abschnitts 117 verminderten Durchmessers mit einem Nadellager 118 auf der Außenseite des Rollenträgers 182 gelagert und an ihrem in der Fig. 6 rechten axialen Ende mit einem Wälzlager 114 auf der darunter befindlichen Außenoberfläche des Rollenträgers 107.

Die in der Fig. 5 links gelegene zweite Antriebsrolle 102 besteht ebenfalls aus einem Rollenmantel 122, der auf einem Rollenkörper 121 sitzt. Es sind die gleichen Materialien vorgesehen wie bei der ersten Antriebsrolle 101. Der Rollenmantel 122 der zweiten Antriebsrolle 102 besitzt einen in der Fig. 6 rechts gelegenen Abschnitt verminderter Dicke, mit dem der Abschnitt 117 verringerten Durchmessers der ersten Antriebsrolle 101 überlappt ist. Der Rollenmantel 122 ist mittels eines Nadellagers 115 auf der Außenseite des Abschnitts 117 verringerten Durchmessers der ersten Antriebsrolle 101 drehbar gelagert. An dem in der Fig. 6 links gelegenen Stirnende ist die zweite Antriebsrolle 102 mittels eines Wälzlagers 124 drehbar auf einem fest mit dem Rollenträger 107 verbundenen radialen Lagerflansch 191 gelagert.

Beide Antriebsrollen 101 und 102 sind also konzentrisch zueinander drehbar auf dem Rollenträger 107 gelagert und können gleichzeitig eine Relativdrehung zueinander ausführen.

Ausgehend von dem Wälzlager 124 nach rechts in der Fig. 6 ist an der Innenfläche des Rollenkörpers 121 der zweiten Antriebsrolle 102 ein Innenzahnkranz 123 geformt, der mit dem zweiten Getrieberad 110 in kämmendem Eingriff steht.

Innerhalb der den Rollenträger exzentrisch durchsetzenden Bohrung ist in der Fig. 6 links von dem die Rotorwelle 181 tragenden Lagerplatte 186 als Untersetzungsgetriebe 106 ein Planetengetriebe mit drei in Axialrichtung aufeinanderfolgenden Getriebestufen vorgesehen. Dieses Planetengetriebe ist in herkömmlicher Weise aufgebaut, so daß für den Fachmann die kurze folgende Beschreibung genügen wird. Der Aufbau des Planetengetriebes ist überdies dem Planetengetriebe ähnlich, wie es in der europäischen Patentanmeldung 89102955.5 ausführlich beschrieben ist. Das Planetengetriebe 106 umfaßt in der von rechts in der Fig. 6 gesehen ersten Stufe einen ersten Planetenträger 130, auf dem mittels Wellen 131 drei Planetenräder 132 drehbar gelagert sind, von denen jedoch in der Zeichnung nur eines dargestellt ist. Diese Planetenräder 132 stehen in kämmendem Eingriff mit einem Sonnenrad der ersten Stufe, das durch eine Außenverzahnung 184 des axial linken Endes der Rotorwelle 181 gebildet ist.

Das Sonnenrad der in der Fig. 6 axial nach links folgenden zweiten Getriebestufe ist einstückig mit dem Planetenträger 130 der ersten Stufe als Außenverzahnung ausgebildet. Der Planetenträger 135 der zweiten Stufe trägt wiederum über Wellen 131 an ihm drehbar gelagerte Planetenräder 136, die auf der Außenverzahnung des ersten Planetenträgers 130 als dem Sonnenrad der zweiten Getriebestufe kämmend umlaufen.

Das Sonnenrad der dritten Getriebestufe ist wiederum auf einer axial nach links verlaufenden Verlängerung des Planetenträgers 135 der zweiten Getriebestufe als Außenverzahnung ausgebildet. Der Planetenträger 139 der dritten Getriebestufe trägt wiederum über Wellen 131 drehbar gelagerte Planetenräder 140, die auf der Außenverzahnung des zweiten Planetenträgers 135 als dem Sonnenrad der dritten Getriebestufe kämmend umlaufen.

Im gesamten Bereich dieses Untersetzungsgetriebes 106 ist die Innenwand der exzentrischen Durchgangsbohrung des Rollenträgers 107 mit einer Innenverzahnung 143 ausgestattet, die mit den Planetenrädern 132, 136 und 140 als Kronenrad des Planetengetriebes in kämmendem Eingriff steht.

Zur Verminderung der Reibung zwischen den einzelnen Getriebestufen ist jeweils zwischen dem in der Fig. 6 links gelegenen Stirnende des jeweiligen Sonnenrads und dem nächstgelegenen Teil, beispielsweise dem nächsten Planetenträger eine Lagerkugel 138 angeordnet.

Wie in der Fig. 6 gezeigt ist, ist der Planetenträger 139 der dritten Planetenstufe rohrartig axial nach links verlängert. Dieser rohrartige Teil des Planetenträgers 139 ist mittels des Wälzlagers 197 an der Innenoberfläche eines den rohrförmigen Teil umgebenden Abschnitts des Rollenträgers 107 gelagert. Der rohrförmige Teil des Planetenträgers ist an seiner linken Stirnseite drehfest mit dem ersten Getrieberad 109 verbunden, bzw. einstückig mit diesem ausgebildet. Dieses erste Getrieberad 109 steht im kämmendem Eingriff mit dem Innenzahnkranz 113 der ersten Antriebsrolle 101.

Axial nach links in der Fig. 6 setzt sich das erste Getrieberad 109 in Form eines rohrförmigen Gehäuses 147 der Rutschkupplung 108 fort, bzw. ist mit diesem einstückig geformt. Das rohrförmige Gehäuse 147 der Rutschkupplung 108 ist konzentrisch mit der Drehachse des ersten Getrieberades 109 ausgebildet.

Das in der Fig. 6 links gelegene offene Ende des rohrförmigen Gehäuses 147 ist über ein Wälzlager 151 auf einer Lagerschulter des sich nach links anschließenden zweiten Getrieberades 110 drehbar und konzentrisch zu diesem abgestützt. Das zweite Getrieberad 110 trägt nach rechts ragend eine axiale Welle, die fest mit dem zweiten Getrieberad verbunden ist. Diese Welle 150 ragt in den Innenraum des Gehäuses 147 der Rutschkupplung 108 hinein und setzt sich im Inneren dieses Gehäuses als Vierkant 154 fort, der schließlich in einem zylindrischen Zapfen endet, welcher drehbar im Planetenträger 139 der dritten Getriebestufe gelagert ist. Im Inneren des Gehäuses 147 ist der Vierkant 154 der Welle 150 von einer Vielzahl von radialen und parallel zueinander ausgerichteten Kupplungsscheiben 148 und 149 umgeben. Die Kupplungsscheiben 148 sind drehfest, jedoch axial verschiebbar auf dem Vierkant 154 angebracht, während die abwechselnd mit ihnen angeordneten Kupplungsscheiben 149 drehbar, jedoch axial verschiebbar mit dem Gehäuse 147 gekoppelt sind. Jeweils zwischen benachbarten Kupplungsscheiben ist jeweils eine Vielzahl von Kupplungsrollen angeordnet, die über den Umfang der Bremsscheiben gleichmäßig verteilt und schräg zu deren Radien angeordnet sind. Das Paket der Kupplungsscheiben 148 und 149 und der Kupplungsrollen 152 ist durch eine als Tellerfedern ausgebildete Federeinrichtung 153 nach rechts zusammengedrückt, wobei die Federkraft dieser Federeinrichtung 153 durch eine Schraubenmutter 155 einstellbar ist.

Das zweite Getrieberad 110 besitzt einen in der Fig. 6 nach links ragenden hohlen Umfangsflansch 157, in dem eine Rollenreibungsbremse vorgesehen ist, wie sie in sehr ähnlicher Ausführung in der europäischen Patentanmeldung 89 102 955.5 beschrieben ist. Diese Rollenreibungsbremse übt zwischen dem fest mit dem zweiten Getrieberad 110 verbundenen hohlen Umfangsflansch 157 und dem starr mit der Halterung 104 verbundenen Lagerzapfen 160 ein vorherbestimmbares und definiertes Bremsmoment aus. Im einzelnen umfaßt diese Rollenreibungsbremse eine im Inneren des Umfangsflansches 157 drehfest, jedoch axial verschieblich am zweiten Getrieberad angebrachte Bremsscheibe 168, die sich an ihrer in der Fig. 5 rechten Stirnfläche über eine Vielzahl von Bremsrollen 167 an der ihr zugewandten Stirnfläche des zweiten Getrieberads 153 abstützt. Die in der Fig. 6 linke Stirnfläche der Bremsscheibe 168 liegt über eine weitere Anzahl von Bremsrollen 167 an einer Druckplatte 166 an, die drehfest, jedoch axial verschieblich mit dem Lagerzapfen 160 verbunden ist. Diese Druckplatte 166 ist über eine Vielzahl von Tellerfedern 161 in axialer Richtung nach rechts vorgespannt, so daß die Druckplatte 166, die Bremsscheibe 168 und die Bremsrollen 167 zur Erzielung eines vorbestimmten Bremsdrehmoments gegeneinandergedrückt sind.

Schließlich setzt sich der Lagerzapfen 160 über seinen Vierkant 169 hinaus noch in einen zylindrischen Ansatz 170 fort, der mit einem Lager 162 drehbar in einer Bohrung des zweiten Getrieberads 110 abgestützt ist, um Biegemomente am Lagerzapfen 160 zu vermindern. Da die Funktionsweise der vorstehend beschriebenen praktischen Ausführungsform identisch ist mit derjenigen der mit Bezug auf die Fig. 1 bis 3 beschriebenen Schemadarstellung, wird auf die dortigen Erläuterungen verwiesen und lediglich noch angemerkt, daß die in der Ausführungsform der Fig. 6 enthaltene, soeben zuletzt beschriebene Rollenreibungsbremse bei der schematischen Darstellung der Fig. 3 der Einfachheit halber weggelassen wurde. Es wurde jedoch in der Beschreibung erwähnt, welche Funktion diese Rollenreibungsbremse besitzt, falls sie im Einzelfall vorgesehen ist.

## Patentansprüche

1. Antriebsrolleneinheit (99) zum Antrieb von Gegenständen (100) auf einer Förderbahn, mit zwei Antriebsrollen (1, 1'), die von einer Elektromotoranordnung (25) über eine Getriebeanordnung (30, 48, 49, 48', 49') drehend antreibbar sind und in ihrer Antriebsstellung mit der Unterseite des anzutreibenden Gegenstands (100) im Eingriff stehen, wobei die beiden Antriebsrollen (1, 1') mit ihren Drehachsen im wesentlichen quer zur Antriebsrichtung des Gegenstands (100) und in ihrer Axialrichtung nebeneinander angeordnet sind, wobei die Getriebeanordnung (30, 48, 49, 48', 49') ein von der Elektromotoranordnung (25) angetriebenes, die erste Antriebsrolle (1) drehend antreibendes erstes Getrieberad (48) und ein mit dem ersten Getrieberad (48) gekoppeltes, die zweite Antriebsrolle (1) drehend antreibendes zweites Getrieberad (48') umfaßt, und wobei die beiden Antriebsrollen (1, 1') in einer Halterung (7) montiert sind, die bezüglich einer Basis (18) der Förderbahn um eine vertikale Achse (15) drehbar gelagert ist, wobei das zweite Getrieberad (48') mit dem ersten Getrieberad (48) mittels einer Rutschkupplung (50) gekoppelt ist, deren Kupplungsdrehmoment derart bemessen ist, daß sich die beiden Antriebsrollen (1, 1') so lange gleichsinnig drehen, solange sich der angetriebene Gegenstand (100) im wesentlichen ungebremst bzw. ungehindert über die Antriebsrolleneinheit (99) hinwegbewegen kann.

2. Antriebsrolleneinheit nach Anspruch 1, dadurch **gekennzeichnet,** daß die Rutschkupplung (50) nach Art einer Rollenreibungskupplung ausgebildet ist, welche eine Vielzahl von relativ zueinander drehbaren Kupplungsscheiben (51, 52) aufweist, zwischen denen jeweils eine Vielzahl von umfangsmäßig verteilten, jeweils im Winkel schräg zur Radialrichtung der Kupplungsscheiben (51, 52) angeordneten Kupplungsrollen (56) angeordnet ist, wobei die Kupplungsscheiben (51, 52) und die dazwischen angeordneten Kupplungsrollen (56) durch eine Federeinrichtung (57) axial zusammengedrückt sind, und daß in Axialrichtung aufeinanderfolgend benachbarte Kupplungsscheiben (51, 52) abwechselnd mit dem ersten (48) bzw. dem zweiten Getrieberad (48') drehfest verbunden sind.

3. Antriebsrolleneinheit nach einem der Ansprüche 1 oder 2, dadurch **gekennzeichnet,** daß die Drehachsen der beiden Antriebsrollen (1, 1') zueinander parallel sind.

4. Antriebsrolleneinheit nach Anspruch 3, dadurch **gekennzeichnet,** daß die Drehachsen der beiden Antriebsrollen (1, 1') miteinander fluchtend koaxial sind und daß die beiden Antriebsrollen (1, 1') die Außenform von Kreiszylindern mit gleichem Durchmesser besitzen.

5. Antriebsrolleneinheit nach einem der Ansprüche 1 bis 4, dadurch **gekennzeichnet,** daß die Elektromotoranordnung (25), die Getriebeanordnung (30, 48, 49, 48', 49') und die Rutschkupplung (50) im Inneren der als Hohlkörper ausgebildeten Antriebsrollen (1, 1') angeordnet sind.

6. Antriebsrolleneinheit nach einem der vorhergehenden Ansprüche, dadurch **gekennzeichnet,** daß der Rotor (27) der Elektromotoranordnung (25) über ein Untersetzungsgetriebe (30) das mit einem Innenzahnkranz (49), der ersten Antriebsrolle (1) kämmende, als Zahnrad ausgebildete erste Getrieberad (48) antreibt, daß das erste Getrieberad (48) mit dem Eingang der Rutschkupplung (50) verbunden ist, und daß der Ausgang der Rutschkupplung (50) das als Zahnrad ausgebildete zweite Getrieberad (48') antreibt, welches mit einem Innenzahnkranz (49') der zweiten Antriebsrolle (1') kämmt.

7. Antriebsrolleneinheit nach einem der vorhergehenden Ansprüche, dadurch **gekennzeichnet,** daß die Antriebsrolleneinheit (99) derart ausgebildet ist, daß sich ihre beiden Antriebsrollen (1, 1') beim Einschalten der Elektromotoranordnung (25) selbsttätig aus einer unteren Ruhestellung in eine obere Antriebsstellung anheben, in der sie mit der Unterseite des anzutreibenden Gegenstands (100) im Eingriff stehen.

8. Antriebsrolleneinheit nach einem der vorhergehenden Ansprüche, dadurch **gekennzeichnet,** daß der im Betrieb mit der Stromzufuhr zu verbindende Stator (26) der Elektromotoranordnung (25) konzentrisch innerhalb des drehbar gelagerten Rotors (27) der Elektromotoranordnung (25) angeordnet und starr und drehfest mit der Halterung (7) verbunden ist.

9. Antriebsrolleneinheit nach Anspruch 7, dadurch **gekennzeichnet,** daß die Elektromotoranordnung (25) den Eingang (31) eines Planetengetriebes (30) antreibt, dessen einer Ausgang (33) das erste Getrieberad (48) antreibt und dessen zweiter Ausgang (36) einen Rollenträger (5) drehend antreibt, auf dem die beiden Antriebsrollen (1, 1') drehbar gelagert sind, wobei der Rollenträger (5) um eine zur Drehachse der Antriebsrollen (1, 1') exzentrische Achse drehbar an der Halterung (7) gelagert ist.

10. Antriebsrolleneinheit nach Anspruch 9, dadurch **gekennzeichnet,** daß der Eingang des Planetengetriebes (30) ein mit der Rotorwelle (14) der Elektromotoranordnung (25) drehfest verbundenes Sonnenrad (31) ist, daß der eine Ausgang des Planetengetriebes (30) ein mit dem ersten Getrieberad (48) drehfest verbundener Planetenträger (33) ist und daß der andere Ausgang ein drehfest am Rollenträger (5) angebrachter Innenzahnkranz (36) ist, der das Kronenrad des Planetengetriebes (30) darstellt.

**Claims**

1. A drive roller unit (99) for driving articles (100) on a conveyor track, comprising two drive rollers (1, 1') which can be driven in rotation by an electric motor means (25) by way of a transmission means (30, 48, 49, 48', 49') and which in their drive position are in engagement with the underside of the article (100) to be driven, wherein the two drive rollers (1, 1') are arranged with their axes of rotation substantially transversely with respect to the direction of drive of the article (100) and in juxtaposed relationship in the axial direction, wherein the transmission means (30, 48, 49, 48', 49') includes a first transmission wheel (48) which is driven by the electric motor means (25) and which drives the first drive roller (1) in rotation, and a second transmission wheel (48') which is coupled to the first transmission wheel (48) and which drives the second drive roller (1') in rotation, and wherein the two drive rollers (1, 1') are mounted in a holding means (7) which is mounted rotatably about a vertical axis (15) with respect to a base (18) of the conveyor track, wherein the second transmission wheel (48') is coupled to the first transmission wheel (48) by means of a slipping clutch (50), the clutch torque of which is such that the two drive rollers (1, 1') rotate in the same direction as long as the driven article (100) can move substantially unbraked or unimpeded beyond the drive roller unit (99).

2. A drive roller unit according to claim 1 characterised in that the slipping clutch (50) is constructed in the manner of a roller friction clutch having a plurality of clutch plates (51, 52) which are rotatable relative to each other and between which is arranged a respective plurality of circumferentially distributed coupling rollers (56) which are each arranged at an angle inclinedly with respect to the radial direction of the clutch plates (51, 52), wherein the clutch plates (51, 52) and the coupling rollers (56) arranged therebetween are axially pressed together by a spring means (57) and that clutch plates (51, 52) which are successively adjacent in the axial direction are alternately non-rotatably connected to the first transmission wheel (48) and the second transmission wheel (48'), respectively.

3. A drive roller unit according to one of claims 1 and 2 characterised in that the axes of rotation of the two drive rollers (1, 1') are parallel to each other.

4. A drive roller unit according to claim 3 characterised in that the axes of rotation of the two drive rollers (1, 1') are disposed in mutually aligned coaxial relationship and that the two drive rollers (1, 1') have the outside shape of circular cylinders of the same diameter.

5. A drive roller unit according to one of claims 1 to 4 characterised in that the electric motor means (25), the transmission means (30, 48, 49, 48', 49') and the slipping clutch (50) are arranged in the interior of the drive rollers (1, 1') which are in the form of hollow bodies.

6. A drive roller unit according to one of the preceding claims characterised in that the rotor (27) of the electric motor means (25) drives by way of a step-down transmission (30) the first transmission wheel (48) which is in the form of a gear wheel and which meshes with an internally toothed ring gear means (49) of the first drive roller (1), that the first transmission wheel (48) is connected to the input of the slipping clutch (50), and that the output of the slipping clutch (50) drives the second transmission wheel (48′) which is in the form of a gear wheel and which meshes with an internally toothed rig gear means (49′) of the second drive roller (1′).

7. A drive roller unit according to one of the preceding claims characterised in that the drive roller unit (99) is so designed that, when the electric motor means (25) is switched on, the two drive rollers (1, 1′) of the drive roller unit automatically rise out of a lower rest position into an upper drive position in which they are in engagement with the underside of the article (100) to be driven.

8. A drive roller unit according to one of the preceding claims characterised in that the stator (26) of the electric motor means (25), which in operation is to be connected to the power supply means, is arranged in concentric relationship within the rotatably mounted rotor (27) of the electric motor means (25), and is rigidly and non-rotatably connected to the holding means (7).

9. A drive roller unit according to claim 7 characterised in that the electric motor means (25) drives the input (31) of a planetary transmission (30) of which one output (33) drives the first transmission wheel (48) and the second output (36) of which drives in rotation a roller carrier (5) on which the two drive rollers (1, 1′) are rotatably mounted, wherein the roller carrier (5) is mounted rotatably on the holding means (7) about an axis which is eccentric with respect to the axis of rotation of the drive rollers (1, 1′) .

10. A drive roller unit according to claim 9 characterised in that the input of the planetary transmission (30) is a sun wheel (31) which is non-rotatably connected to the rotor shaft (14) of the electric motor means (25), that the one output of the planetary transmission (30) is a planet carrier (33 ) which is non-rotatably connected to the first transmission wheel (48), and that the other output is an internally toothed ring gear means (36) which is non-rotatably disposed on the roller carrier (5) and which represents the ring gear of the planetary transmission (30).

**Revendications**

1. Unité d'entraînement à galets (99) destinée à l'entraînement d'objets (100) sur un chemin de transport comprenant deux galets d'entraînement (1, 1′) qui peuvent être entraînés à rotation par un agencement de moteur électrique (25) à l'aide d'un agencement de transmission (30, 48, 49, 48′, 49′) et sont en contact dans leur position d'entraînement avec la face inférieure de l'objet à entraîner (100), les deux galets d'entraînement (1, 1′) étant disposés côte-à-côte dans la direction axiale et leurs axes de rotation étant sensiblement transversaux à la direction d'entraînement de l'objet (100), l'agencement de transmission (30, 48, 49, 48′, 49′) comprenant une première roue de transmission (48) entraînée par l'agencement de moteur électrique (25) et entraînant à rotation le premier galet d'entraînement (1) et une deuxième roue de transmission (48′) couplée avec la première roue de transmission (48), et entraînant à rotation le deuxième galet d'entraînement (1), et les deux galets d'entraînement (1, 1′) étant montés dans un support (7) qui et logé à rotation autour d'un axe vertical (15) par rapport à une base (18) du chemin de transport, la deuxième roue de transmission (48′) étant couplée à la première roue de transmission (48) au moyen d'un accouplement à friction (50) dont le couple d'accouplement est dimensionné d'une manière telle que les deux galets d'entraînement (1, 1′) tournent dans le même sens tant que l'objet entraîné (100) peut se déplacer au-dessus de l'unité d'entraînement à galets (19) sensiblement sans freinage ou sans empêchement.

2. Unité d'entraînement à galets selon la revendication 1, caractérisée en ce que l'accouplement à friction (50) est réalisé à la manière d'un accouplement à frottement de galets qui présente plusieurs disques d'accouplement (51, 52) pouvant tourner l'un par rapport à l'autre entre lesquels est disposé chaque fois plusieurs galets d'accouplement (56) répartis sur un cercle de même axe que les disques disposés chacun en oblique de manière inclinée par rapport à la direction radiale des disques d'accouplement (51, 52), les disques d'accouplement (51, 52) et les galets d'accouplement (56) disposés entre eux étant comprimés axialement ensemble par un dispositif de ressort (57), et en ce que des disques d'accouplement voisins (51, 52) qui se suivent dans la direction axiale sont reliés en alternance de façon fixe en rotation avec la première (48) ou la deuxième (48′) roue de transmission.

3. Unité d'entraînement à galets selon l'une des revendications 1 ou 2, caractérisée en ce que les axes de rotation des deux galets d'entraînement (1, 1′) sont parallèles entre eux.

4. Unité d'entraînement à galets selon la revendication 3, caractérisée en ce que les axes de rotation des deux galets d'entraînement (1, 1′) sont disposés en alignement coaxial entre eux et en ce que les deux galets d'entraînement (1, 1') possèdent la forme extérieure de cylindres circulaires de même diamètre.

5. Unité d'entraînement à galets selon l'une des revendications 1 à 4, caractérisée en ce que l'agencement de moteur électrique (25), l'agencement de transmission (30, 48, 49, 48', 49') et l'accouplement à friction (50) sont disposés à l'intérieur des galets d'entraînement (1, 1') réalisés sous forme de corps creux.

6. Unité d'entraînement à galets selon l'une des revendications précédentes, caractérisée en ce que le rotor (27) de l'agencement de moteur électrique (25) entraîne par une transmission réductrice (30) la première roue de transmission (48) réalisée sous forme de roue dentée qui s'engrène avec une couronne dentée intérieure (49) du premier galet d'entraînement (1), en ce que la première roue de transmission (48) est reliée avec l'entrée de l'accouplement à friction (50) et en ce que la sortie de l'accouplement à friction (50) entraîne la deuxième roue de transmission (48') réalisée sous forme de roue dentée qui s'engrène avec une couronne dentée intérieure (49') du deuxième galet d'entraînement (1').

7. Unité d'entraînement à galets selon l'une des revendications précédentes caractérisée en ce que l'unité d'entraînement à galets (99) est réalisée d'une manière telle que ses deux galets d'entraînement (1, 1') se soulèvent automatiquement lors de la mise en marche de l'agencement de moteur électrique (25) hors d'une position de repos inférieure dans une position d'entraînement supérieure dans laquelle ils sont en contact avec la face inférieure de l'objet à entraîner (100).

8. Unité d'entraînement à galets selon l'une des revendications précédentes, caractérisée en ce que le stator (26) de l'agencement de moteur électrique (25), à relier en fonctionnement à l'amenée de courant, est disposé de manière concentrique à l'intérieur du rotor (27) logé à rotation de l'agencement (25) de moteur électrique et est relié de façon rigide et fixe en rotation avec le support (7).

9. Unité d'entraînement à galets selon la revendication 7, caractérisée en ce que l'agencement de moteur électrique (25) entraîne l'entrée (31) d'un engrenage planétaire (30) dont une première sortie (33) entraîne la première roue de transmission (48) et dont la deuxième sortie (36) entraîne à rotation un porte-galets (5), sur lequel sont logés à rotation les deux galets d'entraînement (1, 1'), le porte-galets (5) étant logé, sur le support (7), à rotation autour d'un axe excentrique par rapport à l'axe de rotation des galets d'entraînement (1, 1').

10. Unité d'entraînement à galets selon la revendication 9, caractérisée en ce que l'entrée de l'engrenage planétaire (30) est une roue solaire (31) reliée de façon fixe en rotation à l'arbre de rotor (14) de l'agencement de moteur électrique (25), en ce qu'une sortie de l'engrenage planétaire (30) est un porte-planétaire (33) relié de façon fixe en rotation avec la première roue de transmission (48) et en ce que l'autre sortie est une couronne dentée intérieure (36) qui est montée de façon fixe en rotation au porte-galets (5) et qui représente la roue de chant de l'engrenage planétaire (30).

# Fig. 1

# Fig. 2

FIG . 3

# FIG.4

179

101

102

103

104

# FIG.5

102    101    179

104    103

FIG.6

EP 0 443 060 B1